# EUROPEAN PATENT APPLICATION

(11) **EP 4 579 434 A1**
(43) Date of publication of application: **02.07.2025**
(21) Application number: 23872809.1
(22) Date of filing: 22.08.2023
(51) Int. Cl.: G06F 3/16, G06F 13/38, G06F 3/041, H04M 1/02, H04M 1/72454

(54) **ELECTRONIC DEVICE, AND METHOD FOR REDUCING RESET TIME OF AUDIO SIGNAL PROCESSING THEREOF**

(30) Priority: 27.09.2022 KR 20220122581; 21.10.2022 KR 20220136772
(71) Applicant: Samsung Electronics Co., Ltd., Suwon-si, Gyeonggi-do 16677 (KR)
(72) Inventor: LEE, Soonkyu, Suwon-si, Gyeonggi-do 16677 (KR); KIM, Jinyoung, Suwon-si, Gyeonggi-do 16677 (KR); YOON, Hanki, Suwon-si, Gyeonggi-do 16677 (KR); LEE, Min, Suwon-si, Gyeonggi-do 16677 (KR); JUNG, Jongkwang, Suwon-si, Gyeonggi-do 16677 (KR)
(74) Representative: Walaski, Jan Filip
(86) International application number: PCT/KR2023/012378
(87) International publication number: WO 2024/071686

(57) **Abstract**

An electronic device according to one embodiment may comprise a sensor device and a sensor processor operatively connected to the sensor device. The electronic device may comprise: an audio processor communicating with the sensor processor; an audio input/output device operatively connected to the audio processor; memory; and a processor. The memory according to one embodiment can include instructions configured such that: the sensor processor determines, under control of the processor, during the execution of an audio function through the audio input/output device, the state of the electronic device on the basis of a measurement value sensed through the sensor device, and transmits the determined device state information to the audio processor. The memory according to one embodiment can include instructions the audio processor senses, on the basis of the device state information transmitted from the sensor processor, that the electronic device has changed from a first state to a second state and, on the basis that the electronic device has changed to the second state, resets an audio processing path for at least partial modules in the audio processor on the basis of configuration information corresponding to the second state, and executes the audio function on the basis of an audio signal processed according to the reset audio processing path.

## Description

### [Technical Field]

Various embodiments relate to an electronic device having a changing physical structure form and a method for reducing the reconfiguration time of audio signal processing thereof.

### [Background Art]

With the advancement of display technology, research and development of an electronic device with a flexible display is being actively conducted through the application of the flexible display technology.

An electronic device is evolving from one uniform shape toward a structure that provides different user experiences to a user by changing the structural form of the electronic device. For example, by applying a flexible display, new forms of electronic devices capable of structural change through folding (e.g., foldable electronic devices), sliding, or rolling (e.g., rollable electronic devices) are being developed.

In an electronic device capable of structural change, as the structural form of physical structures (e.g., a display or a hinge device) changes (e.g., to an opened, closed, or intermediate state), the display area in which information is shown on a display may varies, and the operation scenario of the electronic device may be altered.

### [Disclosure of Invention]

### [Technical Problem]

In a situation where an electronic device outputs an audio signal (e.g., during a call or media playback), when the structural state of the electronic device changes, the placement position of input/output devices changes. As a result, the electronic device may require optimization for audio signal processing scenarios (e.g., adjusting the volume of an output device, or processing noise or echo of an audio signal acquired from an input device) in response to changes in the structural state of the electronic device.

The technical problems to be solved in the disclosure are not limited to those mentioned above, and other unmentioned technical problems will be clearly understood by those skilled in the art to which the disclosure belongs from the following description.

### [Solution to Problem]

An electronic device according to one embodiment may comprise a sensor device. An electronic device according to one embodiment may comprise a sensor processor operatively connected to the sensor device. An electronic device according to one embodiment may comprise an audio processor communicating with the sensor processor. An electronic device according to one embodiment may comprise an audio input/output device operatively connected to the audio processor. An electronic device according to one embodiment may comprise memory. An electronic device according to one embodiment may comprise a processor. The memory according to one embodiment can include instructions configured such that: the sensor processor determines, under control of the processor, during the execution of an audio function through the audio input/output device, the state of the electronic device on the basis of a measurement value sensed through the sensor device, and transmits the determined device state information to the audio processor. The memory according to one embodiment can include instructions the audio processor senses, on the basis of the device state information transmitted from the sensor processor, that the electronic device has changed from a first state to a second state and, on the basis that the electronic device has changed to the second state, resets an audio processing path for at least partial modules in the audio processor on the basis of configuration information corresponding to the second state, and executes the audio function on the basis of an audio signal processed according to the reset audio processing path.

A sensor processor of an electronic device according to one embodiment may comprise be configured to determine, under control of the processor, during the execution of an audio function through the audio input/output device, the state of the electronic device on the basis of a measurement value sensed through the sensor device. The sensor processor of an electronic device according to one embodiment may comprise be configured to transmit the determined device state information to the audio processor. The sensor processor of an electronic device according to one embodiment may comprise be configured to cause the audio processor to, in case that the electronic device is identified as having changed from a first state to a second state based on the device state information transmitted from the sensor processor. The sensor processor of an electronic device according to one embodiment may comprise be configured to reconfigure an audio processing path of the audio processor based on configuration information corresponding to the second state. The sensor processor of an electronic device according to one embodiment may comprise be configured to, execute the audio function based on an audio signal processed along the reconfigured audio processing path.

According to one embodiment method for reducing a reconfiguration time of audio signal processing in an electronic device may comprise determining a state of the electronic device by a sensor processor, based on a measurement value detected by a sensor device, when executing an audio function by using the audio input/output device. According to one embodiment the method may comprise transmitting the determined device state information to an audio processor communicating with the sensor processor. According to one embodiment the method may comprise, in case that the electronic device is identified as having changed from a first state to a second state based on the device state information transmitted from the sensor processor, reconfiguring an audio processing path by the audio processor based on configuration information corresponding to the second state. According to one embodiment the method may comprise executing the audio function by the audio processor based on an audio signal processed along the reconfigured audio processing path.

### [Advantageous Effects of Invention]

According to an embodiment, the electronic device may transmit information about a state change (e.g., closed state ↔ opened state) of the structural shape of the electronic device through direct communication between a sensor module and an audio processing module, and may reconfigure some blocks in the audio processing module, rather than reconfiguring all blocks in the audio processing module, without the involvement of a processor (e.g., an application processor) in response to the state change, thereby ensuring audio quality while reducing a reconfiguration time due to a change in an audio operation scenario and reducing current consumption.

The various embodiments described in the disclosure may be applied not only to the electronic devices capable of structural change, but also in a situation where the audio operation scenario changes based on the user activity environment or the external environment of the electronic device.

The effects obtainable from the disclosure are not limited to those mentioned above, and other unmentioned effects will be clearly understood by those skilled in the art to which the disclosure belongs from the following description.

### [Brief Description of Drawings]

FIG. 1 is a block diagram illustrating an example electronic device in a network environment according to various embodiments.
FIG. 2A illustrates the front surface and the rear surface of a foldable electronic device according to various embodiments in a state in which the electronic device is unfolded.
FIG. 2B illustrates the folded state of a foldable electronic device according to various embodiments.
FIG.2C illustrates the intermediate or unfolded state of a foldable electronic device according to an embodiment.
FIG. 3 illustrates an example of a state change to a structural shape of an electronic device according to an embodiment.
FIG. 4 illustrates a data processing operation of an audio signal in an electronic device according to a comparative embodiment.
FIG. 5A is a block diagram illustrating communication between a sensor processor and an audio processor of an electronic device according to an embodiment.
FIG. 5B is a block diagram illustrating the process of audio signal processing between a sensor processor and an audio processor according to an embodiment.
FIG. 6 is a block diagram illustrating an example of the process of processing an audio signal in a dynamic post-processing module of an electronic device according to an embodiment.
FIG. 7 illustrates a method for reducing a reconfiguration time of audio signal processing in an electronic device according to an embodiment.
FIG. 8 illustrates a method for reducing a reconfiguration time of audio signal processing in an electronic device according to an embodiment.

### [Mode for the Invention]

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

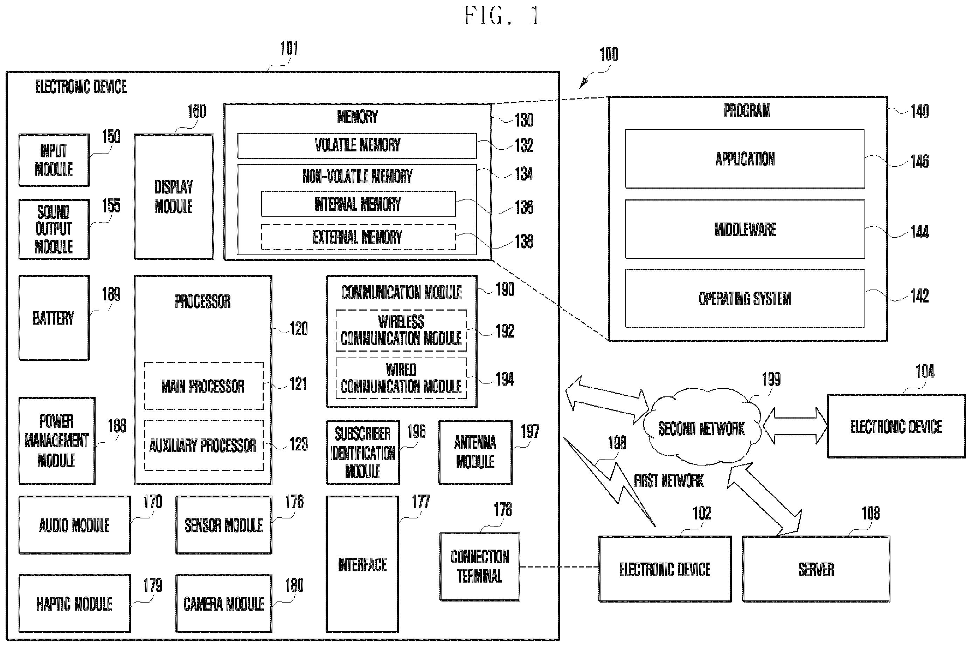

FIG. 1 is a block diagram illustrating an example electronic device in a network environment according to various embodiments.

Referring to FIG. 1, an electronic device 101 in a network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In various embodiments, at least one (e.g., the display device 160 or the camera module 180) of the components may be omitted from the electronic device 101, or one or more other components may be added in the electronic device 101. In various embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196).

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

Hereinafter, the term "state" may refer to the structural form, figure, or shape of the electronic device (or display).

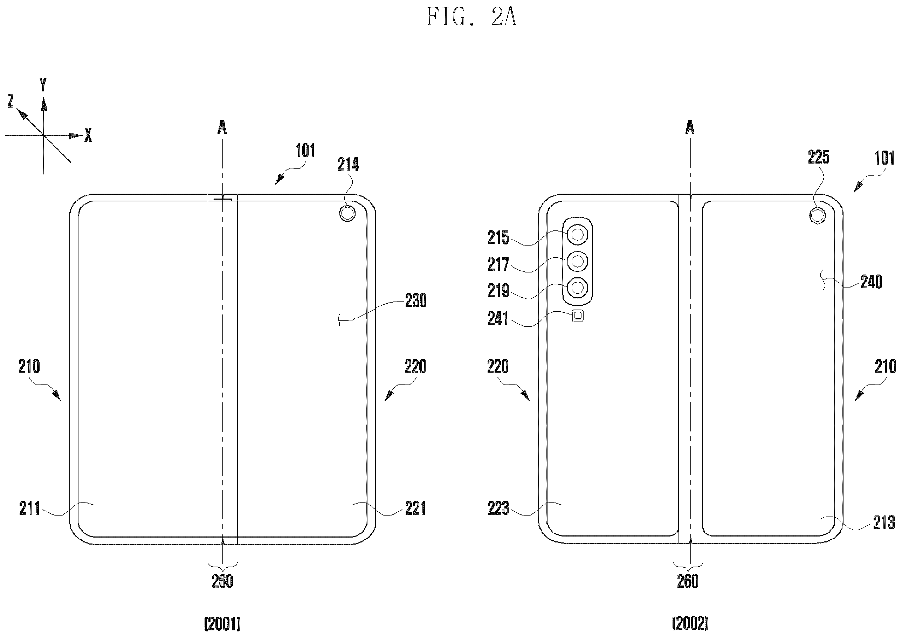

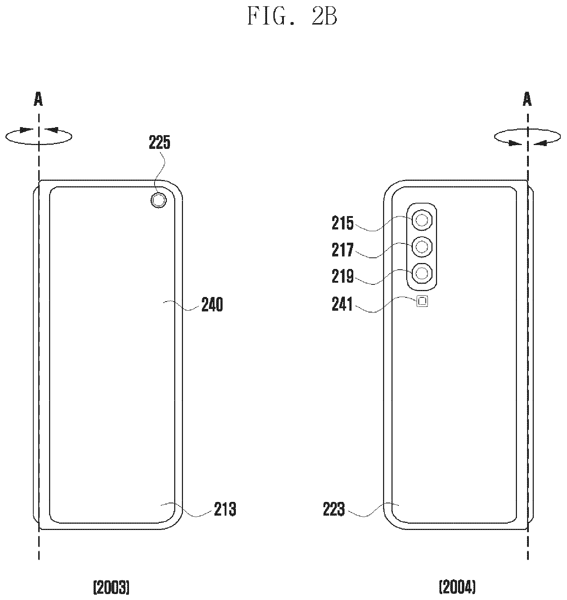

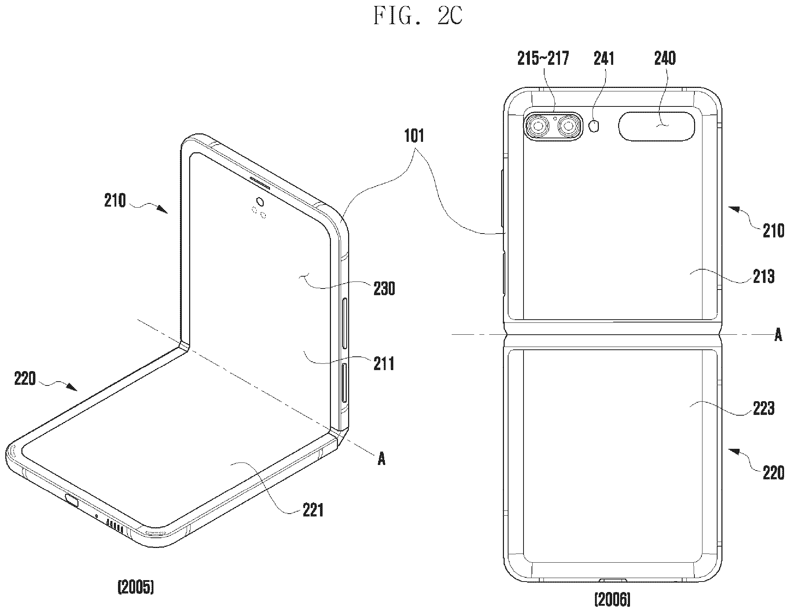

FIG. 2A illustrates the front surface and the rear surface of a foldable electronic device according to various embodiments in a state in which the electronic device is unfolded. FIG. 2B illustrates the folded state of a foldable electronic device according to various embodiments. FIG.2C illustrates the intermediate or unfolded state of a foldable electronic device according to an embodiment.

Referring to FIGS. 2A to 2C, a foldable electronic device (e.g., the electronic device 101 in FIG. 1) according to various embodiments may include a first housing 210 including a first surface 211 and a third surface 213, and a second housing 220 including a second surface 221 and a fourth surface 223. The first surface 211 of the first housing 210 and the second side 221 of the second housing 220 may represent the front surface of the electronic device 101, as illustrated in <2001>, and the third surface 213 of the first housing 210 and the fourth surface 223 of the second housing 220 may represent a rear side of the electronic device 101, as illustrated in <2002>.

The first housing 210 and the second housing 220 may be disposed on both sides of a folding axis (e.g., an axis A) and may have shapes that are symmetrical to each other as a whole with respect to the folding axis. The first housing 210 and the second housing 220 may be designed to be folded relative to each other. At least one hinge device (e.g., a hinge module or a hinge structure) 260 may be formed between the first housing 210 and the second housing 220 to allow the housings 210 and the second housing 220 to be folded relative to each other, thereby allowing the front of the electronic device 101 to be folded.

The angle or distance between the first housing 210 and the second housing 220 may vary depending on whether the electronic device 101 is in an unfolded (or opened) state, a folded (or closed) state, or an intermediate state. For example, the unfolded state or unfolding state may refer to an opened state, an open state, or a flat (or planar) state. The unfolded state is a state in which the first housing 210 and the second housing 220 are disposed side by side, and may refer to a state in which the electronic device 101 is fully unfolded. In the unfolded state, the angle between the first housing 210 and the second housing 220 is 180 degrees, and the first surface 211 of the first housing 210 and the second surface 221 of the second housing 220 are arranged to face the same direction (e.g., a first direction).

The folded state or folding state may refer to a folded state, a closed state, or a close state (e.g., FIG. 2B). The folded state is a state in which the first housing 210 and the second housing 220 are disposed to face each other, and may refer to a state in which the electronic device 101 is fully folded. In the folded state, the angle between the first housing 210 and the second housing 220 forms a narrow angle (e.g., 0 to 5 degrees), and the first surface 211 of the first housing 210 and the second surface 221 of the second housing 220 may face each other. Hereinafter, the electronic device 101 implemented with an in-folding method is described, but the electronic device 101 implemented with an out-folding method may be equally or similarly described.

The intermediate state may be a state in which the first housing 210 and the second housing 220 are disposed at a predetermined angle, and the electronic device 101 may be neither in the unfolded state nor in the folded state (e.g., FIG. 2C). The intermediate state may refer to a state in which the first surface 211 of the first housing 210 and the second surface 221 of the second housing 220 form a predetermined angle (e.g., 6 to 179 degrees).

The electronic device 101 may have a first display 230 (e.g., a main display) (e.g., the display module 160 in FIG. 1) disposed on the first surface 211 and the second surface 221 that are the front surface of the electronic device 101. The first display 230 may be entirely formed on the front surface (e.g., in the first direction of the electronic device 101). The first display 230 may be a flexible display having at least a partial area deformable into a flat or curved surface. The first display 230 may include a first display area corresponding to the first surface 211 or a second display area corresponding to the second surface 221. Furthermore, the electronic device 101 may have a first camera 214 disposed on the second surface 221. Although the drawings illustrate a single first camera 214, multiple first cameras 214 may be disposed. Although the drawings illustrates that the first camera 214 is disposed on the second surface 221, the first camera 214 may be formed on the first surface 211.

Furthermore, the electronic device 101 may have a second display 240 (e.g., a subdisplay or a cover display) (e.g., the display module 160 in FIG. 1) disposed on a portion of the rear surface of the electronic device 101. The second display 240 may be disposed on at least a portion of the third surface 213 of the electronic device 101. The electronic device 101 may include multiple cameras (e.g., 215, 217, 219, and 225) on a rear surface 250 of the electronic device 101. For example, the electronic device 101 may have a second camera 215, a third camera 217, a fourth camera 219 disposed on the fourth surface 223, and a fifth camera 225 disposed on the third surface 213. According to various embodiments, the second camera 215, the third camera 217, the fourth camera 219, and the fifth camera 225 may have the same or difference performance (e.g., the field of view or the resolution). For example, the second camera 215 may have a field of view greater than 125 degrees (e.g., ultra-wide), the third camera 217 may have a field of view ranging from 90 to 125 degrees (e.g., wide), the fourth camera 219 may have a field of view of 90 degrees with a 2x zoom, and the fifth camera 225 may have a field of view of 90 degrees with normal magnification. The electronic device 101 may further include a sensor area 241 on the fourth surface 223. An infrared sensor, a fingerprint sensor, or an illuminance sensor may be disposed in the sensor area 241, similar to the sensor module 176 in FIG. 1.

According to an embodiment, when the electronic device 101 is in an unfolded state (e.g., FIG. 2A), the first display 230 may be turned on (or activated) and the second display 240 may be turned off (or deactivated). When no user input (e.g., touch or button selection) is detected for a predetermined time (e.g., 5 seconds, 10 seconds, or 1 minute) while the first display 230 is turned on, the electronic device 101 may turn off the first display 230. Alternatively, when a user input (e.g., touch or button selection) is detected on the second display 240 while the second display 240 is turned off, the electronic device 101 may turn on the second display 240. According to various embodiments, when the second display 240 is turned on, the first display 230 may be turned off. Alternatively, the electronic device 101 may keep the first display 230 turned on for a predetermined time even when the second display 240 is turned on, and then turn the first display 230 off when no user input is detected on the first display 230 after the predetermined time has elapsed.

The electronic device 101 may further include a sensor module (e.g., the sensor module 176 in FIG. 1). For example, the electronic device 101 may include the sensor module 176 in at least one of the first housing 210 or the second housing 220. The sensor module 176 may include at least one of an acceleration sensor, a gyroscope sensor, a geomagnetic sensor, a proximity sensor, an illuminance sensor, a gesture sensor, or a Hall sensor. The acceleration sensor is a sensor that detects speed, and the gyroscope sensor may detect angular speed, which is the rotation speed of an object. The geomagnetic sensor is a sensor that detects geomagnetism, and may detect the direction (e.g., azimuth) of the geomagnetism, such as east, west, south, or north, like a compass. The proximity sensor may detect whether an object is in close proximity, and the illuminance sensor may measure the amount of ambient light (e.g., illuminance) in real time or periodically. The gesture sensor may detect infrared light. The Hall sensor may detect a change in an electrical signal based on whether an object with magnetism (or magnetic force) moves closer or farther away. When the Hall sensor is utilized to detect a folding state of the electronic device 101, the electronic device 101 may further include a magnet corresponding to the Hall sensor.

As illustrated in <2003> and <2004>, the electronic device 101 may have a hinge device 260 disposed about a folding axis (e.g., the axis A), allowing the front surface of the electronic device 101 may be in a folded state (e.g., a closed state). FIG. 2B illustrates the third surface 213 of the first housing 210 and the fourth surface 223 of the second housing 220 while the electronic device 101 is folded.

According to an embodiment, when the electronic device 101 is in the folded state, the first display 230 may be turned off and the second display 240 may be turned on. When no user input is detected for a predetermined time while the second display 240 is turned on, the electronic device 101 may turn off the second display 240. When the electronic device 101 is in a folded state, the second display 240 is turned off, and a button formed on (or mounted to) the electronic device 101 is selected, the electronic device 101 may turn on the second display 240. Alternatively, when the electronic device 101 is in a folded state and user input is detected on the second display 240 after the second display 240 has been turned off, the electronic device 101 may turn on the second display 240.

The foldable electronic device in FIGS. 2A and 2B is an example of the electronic device 101 having two surfaces (e.g., top and bottom side surfaces or left and right side surfaces) parallel to each other and having similar lengths. The foldable electronic device in FIG. 2C is an example of the electronic device 101 in which a first length of two side surfaces (e.g., top and bottom side surfaces) parallel to each other is longer or shorter than a second length of the other two side surfaces (e.g., left and right side surfaces). The foldable electronic device in FIGS. 2A and 2B and the foldable electronic device in FIG. 2C may have the same or similar structure or operation, differing only in the exterior of the electronic device.

As illustrated in <2005>, the electronic device 101 may have a hinge device 260 disposed around a folding axis (e.g., an axis A), so that may be in an intermediate state in which a first housing 210 and a second housing 220 form a predetermined angle. For example, in the intermediate state, one surface of the first housing 210 or the second housing 220 may be placed on the floor, and the second housing 220 placed on the floor and the first housing 210 not placed on the floor may form a predetermined angle. The drawing illustrates a state in which a fourth surface 223 of the second housing 220 is placed on the floor, and a first surface 211 of the first housing 210 and a second surface 221 of the second housing 220 form a predetermined angle.

According to an embodiment, in an intermediate state 201, a first display 230 may be activated, and a user interface may be displayed via the first display 230. The user interface may be displayed on the entire screen of the first display 230, or may be divided into two parts (or areas) and displayed, such as a split screen. Alternatively, in an intermediate state, an output unit (e.g., an application execution screen) may be displayed via the first surface 211 of the first housing 210 and an input unit (e.g., a keypad) may be displayed via the second surface 221 of the second housing 220. As illustrated in <2005>, the electronic device 101 may include a cover display (e.g., the display module 160 in FIG. 1, the second display 240 in FIGS. 2A to 2C) on a third surface 213 of the first housing 210 of the electronic device 101 at a portion of the rear surface. The electronic device 101 may further include multiple cameras 215 to 217 and a sensor area 241 beside the second display 240.

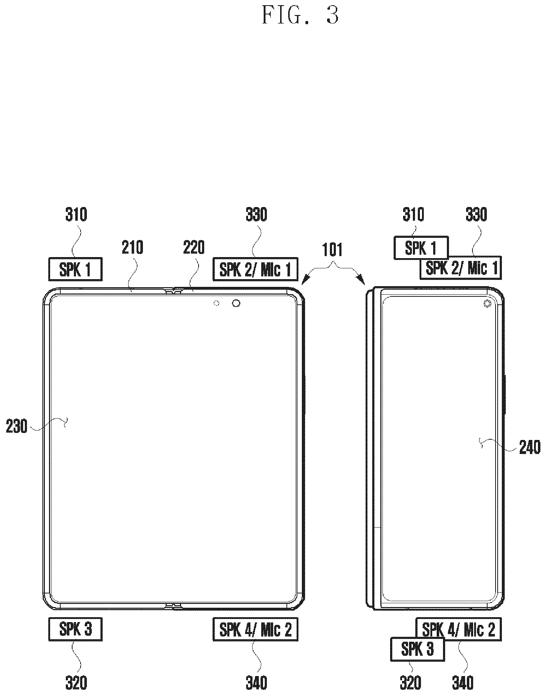

FIG. 3 illustrates an example of a state change to a structural shape of an electronic device according to an embodiment.

The following embodiments will be described assuming that an electronic device 101 is a foldable electronic device, but are not limited thereto. Furthermore, in addition to foldable electronic devices, the various examples described in the disclosure may be applied to electronic devices in which the operation scenario of an audio device (or audio environmental conditions) can change in response to changes in the structural state of the electronic device 101 (or a display) or changes in the environment of the electronic device.

In an electronic device (e.g., the foldable electronic device 101 in FIGS. 2A to 2C) according to an embodiment, the structural state may change between a first state and a second state, and the distance between components may change depending on the state change.

For example, as illustrated in FIG. 3, the electronic device 101 may include multiple output devices (e.g., speakers) and multiple input devices (e.g., microphones). The speakers/microphones 310, 320, 330, and 340 illustrated in FIG. 3 are shown solely to illustrate the arrangement position or arrangement direction thereof, and may be substantially arranged in a housing (e.g., the first housing 210 or the second housing 220) of the electronic device 101.

As illustrated in <301>, when a user views the front surface of the electronic device 101 on which a display (e.g., the first display 230) is visible in an opened (or unfolded) state, a first speaker 310 may be disposed at a first position of the first housing 210, a second speaker 320 may be disposed at a second position of the first housing 210, a third speaker/a first microphone 330 may be disposed at a third position of the second housing 220, and a fourth speaker/a second microphone may be disposed at a fourth position of the second housing 220.

As illustrated in <302>, If the user changes the electronic device 101 from the opened state to a closed state (e.g., a folded state) while executing an audio function (e.g., a call function, a media playback function, or a recording function), the distance between the speakers or the distance between the speakers and the microphone becomes shorter compared to 301, as the first housing 210 and the second housing 220 are folded. For example, when the distance between the speakers decreases, the electronic device 101 may require control to adjust the volume or deactivate a speaker at a specific position. When the distance between the speaker and the microphone decreases, the electronic device 101 may need to change a configuration for processing echo or noise entering the microphone.

To provide the user with an executed audio function (e.g., a calling function, a media playback function, or a recording function) without interruption even when the electronic device 101 changes from a first state to a second state, the electronic device 101 may require the process of reconfiguring an audio module (e.g., the audio module 170 in FIG. 1, or an audio digital signal processor (DSP)) of the electronic device 101 to an optimized operation scenario based on the state change of the electronic device 101. For example, when the electronic device 101 is in the first state, the electronic device 101 may configure an audio processing path of the audio module based on first configuration information, and when the electronic device 101 changes to the second state, the electronic device 101 may reconfigure the audio module based on second configuration information, and then control the input and output of an audio signal through the changed audio processing path.

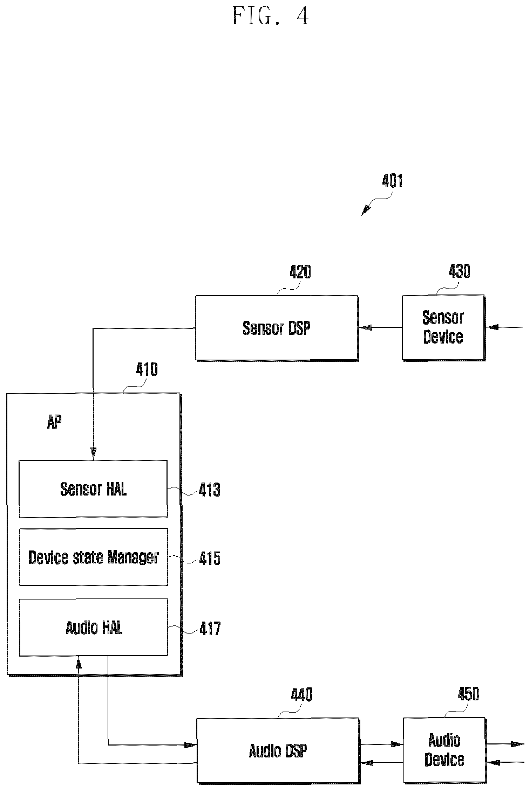

FIG. 4 illustrates a data processing operation of an audio signal in an electronic device according to a comparative embodiment.

Referring to FIG. 4, according to a comparative embodiment (or according to the prior art), an application processor (AP) 410 of an electronic device 401 may be operatively connected to a sensor digital signal processor (sensor DSP) 420 and an audio DSP 440.

The sensor DSP 420 may be operatively connected to a sensor device (e.g., a gyro sensor, an acceleration sensor, or a Hall sensor) 430 that measures the state of the electronic device 401. The audio DSP 440 may be operatively connected to an audio device (e.g., an audio input device (a microphone) or an audio output device (a speaker)) 450.

The sensor DSP 420 may receive a measurement value (or a sensed value) measured by the sensor device 430, and may determine the state of the electronic device 401 based on the measurement value. The sensor DSP 420 may transmit information regarding the state of the electronic device 101 (hereinafter, device state information) to the AP 410 via the sensor hardware abstraction layer (sensor HAL) 413 of the AP 410.

The AP 410 may control the overall operation of the electronic device 401 and may control the audio DSP 440 by generating a control signal or configuration information regarding the audio processing path of the audio DSP 440 based on the state information of the electronic device 401.

The device state information transmitted from the sensor DSP 420 via the sensor HAL 413 may be transmitted to a device state manger 415 of the AP 410.

The device state manager 415 may determine a state change of the electronic device 401 based on the device state information transmitted via the sensor HAL 413. The device state manager 415 may transmit device state of the electronic device 401 to an audio hardware abstraction layer (audio HAL) 417.

To change an operation scenario of the audio DSP 440 in response to the state change of the electronic device 401, the audio hardware abstraction layer (audio HAL) 417 may generate a control signal or (re)configuration information corresponding to the state change and transmit the control signal or the (re)configuration information to the audio DSP 440.

The audio DSP 440 may reconfigure the operation scenario for the audio processing path based on the control signal or the (re)configuration information transmitted via the audio hardware abstraction layer (audio HAL) 417, and may control the input and output of an audio signal through the changed audio processing path.

**In** the comparative embodiment, the AP 410 transmits the control signal or the (re)configuration information to the audio DSP 440 and the audio device 450 via the audio hardware abstraction layer (audio HAL) 417, and controls the reconfiguration of the audio processing path by closing and then re-opening all audio modules (e.g., both the audio DSP 440 and the audio device 450). For example, the audio DSP 440, under the control of the AP 410, controls the close and open states of an audio processing path to change the audio processing path, and may perform an update to a setting value (or a calibration value) that matches the changed audio processing path.

**In** this process, the audio DSP 440 stops processing a previous operation scenario during audio playback and reconfigures the previous operation scenario to a new operation scenario to output an audio signal, and thus, latency may inevitably occur in audio processing. For example, the AP 410 may take about 300 ms to detect a state change via the sensor HAL 413 and transmit state change information to the audio HAL 417, and there may be latency of about 200 ms for the audio HAL 417 to control the close and open states of the audio processing path. As a result, when the state of the electronic device 401 changes during the execution of an audio function, a user may perceive audio dropouts due to the reconfiguration of the audio processing path. Furthermore, in the electronic device 401, the time required for the audio processing path reconfiguration (e.g., an echo removal function) may degrade audio quality, and the AP 410 may be necessarily involved in transmitting state change information, and thus the current consumption by the AP 410 may increase.

Hereinafter, a description will be made of a method and a device that can ensure audio quality while minimizing operation delay and reducing current consumption in a situation in which the state characteristics of the electronic device change and in which an operation scenario related to an audio function need to be changed based on the state characteristics.

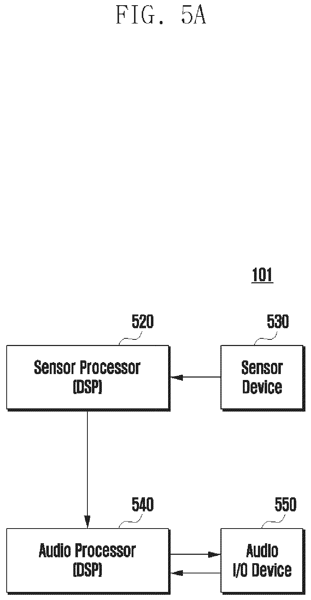

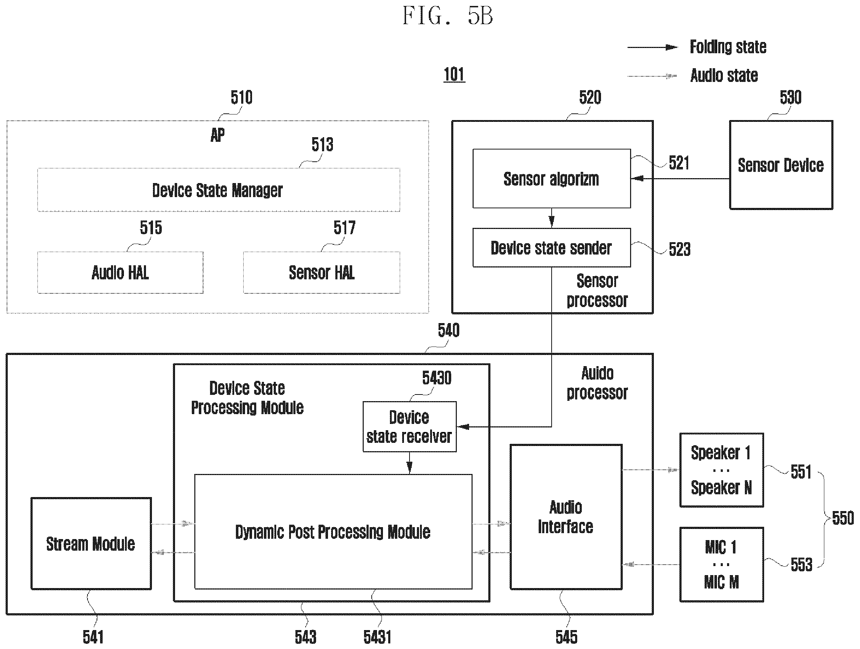

FIG. 5A is a block diagram illustrating communication between a sensor processor and an audio processor of an electronic device according to an embodiment, and FIG. 5B is a block diagram illustrating the process of audio signal processing between a sensor processor and an audio processor according to an embodiment.

Referring to FIGS. 5A and 5B, an electronic device (e.g., the electronic device 101 in FIG. 1 or the foldable electronic devices in FIGS. 2A to 2C) according to an embodiment may include a sensor device 530, a sensor processor 520 (e.g., a sensor digital signal processor (sensor DSP)), an audio processor 540 (e.g., an audio DSP), and an audio input/output device 550. For example, the sensor device 530 and the sensor processor 520 may be referred to as the sensor module 176 in FIG. 1, and the audio processor 540 and the audio input/output device 550 may be referred to as the audio module 170 in FIG. 1.

In an example of an operation described in the disclosure, an application processor (AP) 510 (e.g., the main processor 121 in FIG. 1) is not involved. However, the electronic device 101 may include the AP 510 for overall control of the electronic device 101. The AP 510 may further include a sensor hardware abstraction layer (sensor HAL) 513, a device state manager 515, and an audio hardware abstraction layer (audio HAL) 517 to perform other functions, separately from processing audio operations in response to changes in device state. These are merely examples, and the disclosure is not limited thereto.

According to an embodiment, the sensor processor 520 may be implemented to transmit state information of the electronic device 101 to the audio processor 540 via inter-processor communication (IPC).

According to an embodiment, the sensor device 530 may be operatively connected to the sensor processor 520, may acquire a measurement value (or a sensed value) indicating the state of the electronic device 101, and may transmit the measurement value to the sensor processor 520.

The sensor device 530 may include, but is not limited to, various sensors (e.g., an acceleration sensor, a gyro sensor, and/or a Hall sensor) that measure the state of the electronic device. For example, the sensor device 530 may include sensors that can detect a change in the structural state of the electronic device 101 or a state change that requires a change in operation scenario based on an external environment, and the type of sensors are not limited.

According to an embodiment, the sensor processor 520 may determine the state of the electronic device 101 by calculating the measurement value received from the sensor devices 530 via a sensor algorithm 521.

The sensor processor 520 may calculate the measurement value received from the sensor device 530 to determine at least one of a folding angle, the degree of display extension, or detailed information about screen rotation. For example, the sensor processor 520 may calculate the folding angle of the electronic device 101 based on the measurement value and determine a state of the electronic device 101 (e.g., an opened/unfolded state, a closed/folded state, or an intermediate/flexed state) based on the folding angle. The sensor processor 520 may determine that the electronic device 101 is in an unfolded state when the folding angle of the electronic device 101 is 180 degrees, in an intermediate state when the folding angle is between 90 and 120 degrees, and in a folded state when the folding angle is 0 degrees.

According to an embodiment, the sensor processor 520 may transmit device state information determined by the sensor algorithm 521 to a device state receiver 5430 of the audio processor 540 via a device state sender 523.

According to an embodiment, the sensor processor 520 and the audio processor 540 may communicate with each other via inter-processor communication (IPC). For example, the sensor processor 520 and the audio processor 540 may each perform IPC by using accessible shared memories. The sensor processor 520 may record the device state information into the shared memory and may transmit, to the audio processor 540, a notification signal (e.g., an interrupt signal) indicating that the state information of the electronic device 101 has been recorded. Based on the notification signal, the audio processor 540 may access the shared memory to obtain the device state information. In another example, the sensor processor 520 and the audio processor 540 may communicate with each other via an inter-communication bus designed in the electronic device 101. The sensor processor 520 may transmit data, including the notification signal and the device state information, to the audio processor 540 via the inter-communication bus.

According to an embodiment, the audio processor 540 may receive the device state information from the sensor processor 520 via the device state receiver 5430, and may use a dynamic state processing module 543 to configure (or reconfigure) an audio processing path in the audio processor 540 based on configuration information of an audio operation scenario established in response to the device state information. The audio processor 540 may transmit a signal, which controls the audio input/output device 550 (e.g., an audio output device 551 and an audio input device 553), to the audio input/output device 550 (e.g., the audio output device 551 and the audio input device 553) via an audio interface 545.

According to an embodiment, the audio processor 540 may include a stream module 541, the dynamic state processing module 543, and the audio interface 545.

The stream module 541 may control audio signals appropriate for each audio scenario to be processed on a stream-by-stream basis.

The dynamic state processing module 543 may include a dynamic post-processing module 5431 and a device state receiver 5430. The dynamic post-processing module 5431 may perform post-processing on audio input and output signals. For example, the dynamic post-processing module 5431 may perform at least one of the following functions regarding audio signals received via the stream module 541 or the audio interface 545: changing a sampling rate, applying at least one filter, performing interpolation processing, amplifying or attenuating all or some frequency bands, processing noise (e.g., noise or echo attenuation or echo removal), changing channels (e.g., switching between mono and stereo), extracting a designated signal, or configuring a gain value. The functions performed by the dynamic post-processing module 5431 may be understood as a single processing function block.

The dynamic state processing module 543 may control the close and open states of processing function blocks in the dynamic post-processing module 5431, and may configure (or reconfigure) an audio processing path by changing the calibration value of each processing function block.

The audio interface (or port module) 545 may be connected to the audio input/output device 550, and may assign an output port (or speaker) or assign an input port (or microphone) based on channel information of the audio signal processed by the dynamic post-processing module 5431.

According to an embodiment, the electronic device 101 may preconfigure an optimized audio processing path corresponding to the state of the electronic device, and may store configuration information corresponding to an audio processing path for each state. The configuration information of the audio processing path may include close/open states of processing function blocks and calibration values of the function blocks (e.g., parameters, applied filters, gain values, channel information, etc.). For example, when the electronic device 101 is in a first state, the audio processor 540 may configure an audio processing path by using first configuration information corresponding to the first state. In another example, when the electronic device 101 is in a second state, the audio processor 540 may configure an audio processing path by using second configuration information corresponding to the second state.

According to an embodiment, during the execution of an audio function (e.g., a call function, a media playback function, or a recording function), the audio processor 540 may process audio signals based on an audio processing path (e.g., a reception processing path and/or a transmission processing path) to control the input and output of the audio signals. In the case of the transmission processing path, an audio input signal or input data obtained via the audio input device 553 may be processed in the order of the audio interface 545, the dynamic post-processing module 5431, and the stream module 541. In the case of the reception processing path, an audio output signal or output data may be processed in the order of the stream module 541, the dynamic post-processing module 5431, and the audio interface 545, and the processed audio signal may be output via the audio output device 551. In some cases, the audio output signal or the output data transmitted to the stream module 541 may be an audio signal received via the AP 510 or a communication module (e.g., the communication module 190 in FIG. 1) of the electronic device 101.

According to an embodiment, the audio processor 540 may use the device state processing module 543 to determine a state change of the electronic device 101 based on the device state information received from the sensor processor 520 via the device state receiver 5430.

The audio processor 540 may use the device state processing module 543 to reconfigure the audio processing path by using the configuration information of the audio operation scenario established in response to the state change of the electronic device 101.

For example, the device state processing module 543 may determine a state change of the electronic device in an audio signal playback environment (e.g., during a call, media playback) and may change or update the audio processing path by reconfiguring, based on the state change, only some blocks (e.g., the dynamic post-processing module 5431) in the audio processor 540, rather than reconfiguring the entire audio processor 540. The device state processing module 543 may reconfigure the dynamic post-processing module 5431 based on the state change while maintaining the configuration of the stream module 541 and audio interface 545.

According to an embodiment, the electronic device 101 may reconfigure only the module necessary for an audio processing path in situations where the scenario of an audio processing operation needs to be reconfigured in response to a state change of the electronic device, thereby reducing unnecessary operations such as restarting the entire audio processor, as shown in the comparative embodiment. Furthermore, by reconfiguring the audio operation scenario through direct communication between the sensor processor and the audio processor, rather than through control of the AP, the electronic device may reduce latency due to information exchange and improve current consumption due to the AP.

According to another embodiment, in addition to reconfiguring audio in response to a structural state change of the electronic device, the electronic device 101 may detect a state change due to the external environment, and when a reconfiguration of an audio processing path is required based on the state change, may reconfigure the audio processing path via the audio processor 540 even when the AP is not awake (e.g., in sleep mode). For example, the electronic device may utilize artificial intelligence (AI) to combine position information with external audio environment information to detect state changes, such as a user being inside a vehicle or connected to a nearby Bluetooth device. In this case, the sensor processor 520 may transmit state change information based on the environment to the audio processor 540, and the audio processor 540 may reconfigure an audio operation scenario to an audio operation that is appropriate for the internal situation of the vehicle or optimized for the nearby Bluetooth device.

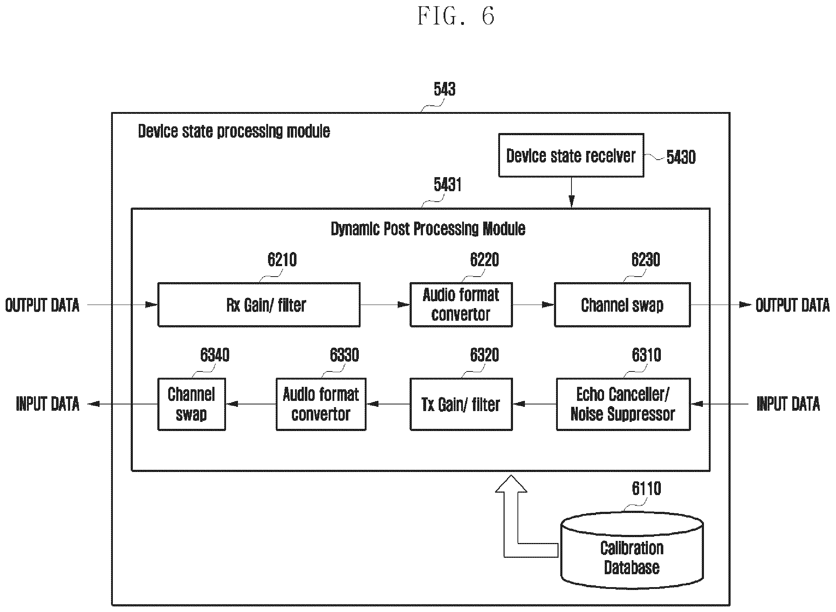

FIG. 6 is a block diagram illustrating an example of the process of processing an audio signal in a dynamic post-processing module of an electronic device according to an embodiment.

Referring to FIG. 6, a device state processing module (e.g., the device state processing module 540 in FIG. 5B) of an audio processor (e.g., the audio processor 540 in FIGS. 5A/5B) according to an embodiment may include a device state receiver (e.g., the device state receiver 5430 in FIG. 5B), a dynamic post-processing module (e.g., the dynamic post-processing module 5431 in FIG. 5B), and a calibration database (DB) 6110. The device state receiver (e.g., the device state receiver 5430 in FIG. 5B) and the dynamic post-processing module (e.g., the dynamic post-processing module 5431 in FIG. 5B) may be the same as the configuration illustrated in FIG. 5B.

The calibration DB 6110 may include configuration information (or calibration data) optimized for an audio processing path (e.g., including a reception processing path and a transmission processing path) corresponding to the state of the electronic device 101. For example, the calibration DB 6110 may include configuration information (i.e., mapping information regarding close/open states of processing function blocks and setting values (or calibration values)) of an audio processing path for each device state (e.g., a first state, a second state, or a third state).

The device state processing module 543 may receive device state information from the device state sender 523 of the sensor processor 520 via the device state receiver 5430. The device state processing module 543 may detect a state change of the electronic device 101 based on the device state information, and may obtain or load configuration information (or calibration data) corresponding to the changed state information from the calibration DB 6110.

The device state processing module 543 may reconfigure or update the audio processing path by changing the configuration of processing function blocks in the dynamic post-processing module 5431 based on the configuration information (or calibration data). The operations of the dynamic post-processing module 5431 may be categorized into an input data processing operation and an output data processing operation. In an example of an output data processing operation path (or a reception processing path), the device state processing module 543 may reconfigure the audio processing path by updating an RX gain/filter block 6210 in the dynamic post-processing module 5431 to an optimized setting value based on configuration information (or calibration data) corresponding to the changed state of the electronic device 101, and then changing the format of an audio format converter block 6220 and changing the configuration of the output channel of a channel swap block 6230.

In an example of an input data processing operation path (or a transmission processing path), the device state processing module 543 may reconfigure an audio processing path by changing the configuration of an echo canceler and noise suppressor block 6310 in the dynamic post-processing module 5431 based on configuration information (or calibration data) corresponding to the changed state of the electronic device 101, updating a TX gain/filter block 6320 to an optimized setting value, changing the format of an audio format converter block 6330, and changing the configuration of an output channel of a channel swap block 6340. The example in FIG. 6, the processing function blocks in the dynamic post-processing module 5431 are merely illustrative, and other function blocks, other than the disclosed blocks, may be added along the audio processing path.

For example, when the electronic device 101, which includes four audio output devices, is in an unfolded state, the audio processor 540 may process an audio signal by configuring a channel change function block in the dynamic post-processing module 5430 to four channels. When the electronic device changes from the unfolded state to a folded state, the sensor processor may transmit state information to the audio processor, and the audio processor may reconfigure the configuration of the channel change function block in the dynamic post-processing module to two channels without control from the AP, thereby processing the audio signal through the changed audio processing path.

An electronic device (e.g., the electronic device 101 in FIGS. 1, 2A to 2C, FIG. 3, FIGS. 5A and 5B) according to an embodiment may include a sensor device (e.g., the sensor module 176 in FIG. 1 or the sensor device 530 in FIGS. 5A and 5B). The electronic device 101, according to an embodiment, may include a sensor processor (e.g., the auxiliary processor 123 in FIG. 1 or the sensor processor 520 in FIGS. 5A and 5B) operatively connected to the sensor device. The electronic device 101, according to an embodiment, may include an audio processor (e.g., the auxiliary processor 123 in FIG. 1 or the audio processor 540 in FIGS. 5A and 5B) configured to communicate with the sensor processor 520. The electronic device 101, according to an embodiment, may include an audio input/output device (e.g., the audio input/output device 550 in FIGS. 5A and 5B) operatively connected to the audio processor 540. The electronic device 101 according to an embodiment may include a memory (e.g., the memory 130 in FIG. 1) and a processor (e.g., the main processor 121 in FIG. 1). The memory 130 according to an embodiment may include instructions configured to cause the sensor processor 520 to determine a state of the electronic device 101, based on a measurement value detected by the sensor device 530, when executing, under control of the processor (e.g., the main processor 121 in FIG. 1), an audio function using the audio input/output device 550. The memory 130 according to an embodiment may include instructions configured to cause the sensor processor 520 to transmit the determined device state information to the audio processor 540. The memory 130 according to an embodiment may include instructions configured to cause the audio processor 540 to detect that the electronic device 101 has changed from a first state to a second state based on the device state information transmitted from the sensor processor 520. The memory 130 according to an embodiment may include instructions configured to cause the audio processor 540 to reconfigure an audio processing path of the audio processor 540 based on the change of the electronic device 101 to the second state and based on configuration information corresponding to the second state. The memory 130 according to an embodiment may include instructions configured to cause the audio processor 540 to execute the audio function based on an audio signal processed along the reconfigured audio processing path.

The sensor processor 520 of the electronic device 101 according to an embodiment may be configured to determine the state of the electronic device 101 based on a measurement value detected by the sensor device 530 during execution of an audio function via the audio input/output device 550. The sensor processor 520 of the electronic device 101 according to an embodiment may be configured to transmit the determined device state information to the audio processor 540. The audio processor 540 of the electronic device 101 according to an embodiment may be configured to detect that the electronic device 101 has changed from a first state to a second state based on the device state information transmitted from the sensor processor 520. The audio processor 540 of the electronic device 101 according to an embodiment may be configured to reconfigure an audio processing path of the audio processor 540 based on the change of the electronic device 101 to the second state and based on configuration information corresponding to the second state. The audio processor 540 of the electronic device 101 according to an embodiment may be configured to execute the audio function based on an audio signal processed along the reconfigured audio processing path.

The memory 130 according to an embodiment may further include instructions configured to cause the audio processor 540 to reconfigure an audio processing path for at least some modules (e.g., a post-processing module and a dynamic post-processing module) in the audio processor 540 based on the configuration information, wherein the at least some modules may include a post-processing module.

The electronic device 101 according to an embodiment may further include a flexible display (e.g., the display module 160 in FIG. 1 or the display 230 in FIGS. 2A to 2C) having a variable display area for displaying visual information, and the device state information may include one of an opened state, a closed state, and an intermediate state in response to a state change of the flexible display 230.

The audio processor 540 according to an embodiment may include a stream module (e.g., the dynamic stream module 541 in FIG. 5A), a dynamic post-processing module (e.g., 5431 in FIGS. 5A and 5B), and an audio interface (e.g., 545 in FIG. 5A), and the memory 130 may further include instructions configured to cause the audio processor 540 to reconfigure an audio processing path of the dynamic post-processing module 5431 based on the change of the electronic device 101 to the second state, while maintaining the configuration of the stream module and the audio interface.

The configuration information according to an embodiment may include first configuration information optimized for the first state of the electronic device 101, second configuration information optimized for the second state, and Nth configuration information optimized for an Nth state.

Each piece of the configuration information according to an embodiment may include information about the closed or open state of processing function blocks included in the dynamic post-processing module 5431 and a setting value of each processing function block, and the processing function blocks may include at least one among a gain processing block, a filter application block, an echo removal block, an audio format change block, and a channel change block.

The sensor processor 520 and the audio processor 540, according to an embodiment, may be configured to communicate with each other via inter-processor communication (IPC).

The inter-processor communication (IPC) according to an embodiment may include using a shared memory accessible by the sensor processor 520 and the audio processor 540, or using a communication bus designed for communication between the sensor processor 520 and the audio processor 540.

The sensor processor 520 according to an embodiment may include a sensor digital signal processor, and the audio processor 540 may include an audio digital signal processor.

The memory 130 according to an embodiment may further include instructions which cause the sensor processor 520 to detect a state based on a change in external environment of the electronic device 101 and transmit state information based on the external environment change to the audio processor 540, and cause the audio processor 540 to reconfigure an audio processing path in the audio processor 540 based on the state information transmitted from the sensor processor 520.

The memory 130 according to an embodiment may further include instructions which cause the audio processor 540 to maintain an audio processing path in response to a current state when the state of the electronic device 101 has not changed based on the device state information transmitted from the sensor processor 520.

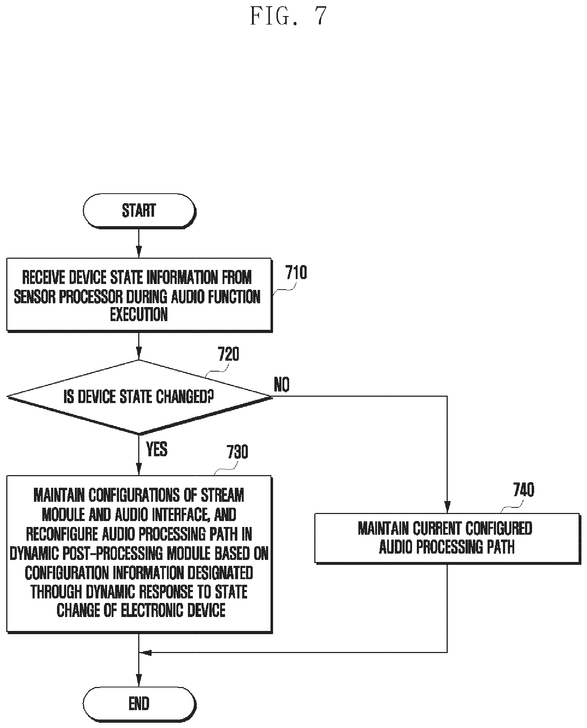

FIG. 7 illustrates a method for reducing a reconfiguration time of audio signal processing in an electronic device according to an embodiment.

Referring to FIG. 7, according to an embodiment, an audio processor (e.g., the audio processor 540 in FIGS. 5A/5B) of an electronic device (e.g., the electronic device 101 in FIG. 1 or the foldable electronic device in FIGS. 2A to 2C) may, in operation 710, receive state information of electronic device 101 (hereinafter, device state information) from a sensor processor (e.g., the sensor processor 520 in FIGS. 5A/5B) in the context of processing and outputting an audio signal.

The audio processor 540 may receive the device state information from the sensor processor 520 by using various communication methods (e.g., shared memory inter-processor communication (IPC) or an inter-communication bus. For example, the sensor processor 520 may transmit the device state information to the device state receiver 5430 of the audio processor 540 via the device state sender 523.

In operation 720, the audio processor 540 may determine whether the state of the electronic device 101 has changed based on the state information of the electronic device.

In operation 730, when the state of the electronic device 101 has changed, the audio processor 540 may maintain the configuration of the stream module 541 and the audio interface 545, and may reconfigure an audio processing path in the dynamic post-processing module 543 based on configuration information designated in response to the state change of the electronic device 101. The configuration information of the audio processing path may include close/open states of processing function blocks and calibration values (e.g., parameters, applied filters, gain values, channel information, format information, etc.) of the processing function blocks.

For example, the audio processor 540 may reconfigure the audio processing path by controlling the close and open states of processing function blocks in the dynamic post-processing module 5431 and changing a calibration value of each processing function block.

In operation 740, when the state of the electronics does not change, the audio processor 540 may maintain the current configuration of the audio processing path in the audio processor.

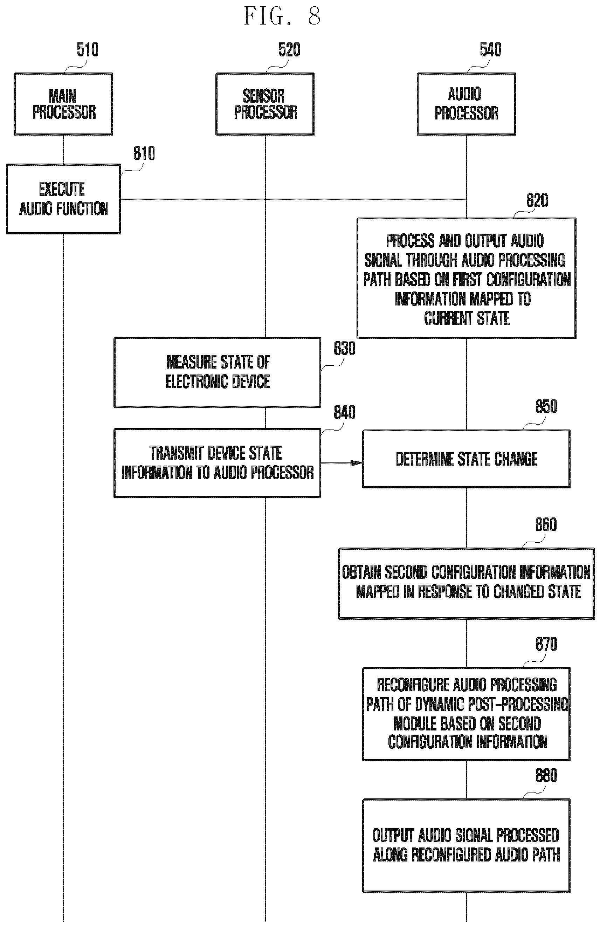

FIG. 8 illustrates a method for reducing a reconfiguration time of audio signal processing in an electronic device according to an embodiment.

In the following embodiment, operations may each be performed sequentially, but are not necessarily performed sequentially. For example, the order of the operations may be changed, and at least two operations may be performed in parallel.

Referring to FIG. 8, according to an embodiment, a main processor (e.g., the AP 510 in FIG. 5B) of an electronic device (e.g., the electronic device 101 in FIG. 1 or the foldable electronic device in FIGS. 2A to 2C) may, in operation 810, control an audio processor (e.g., the audio processor 540 in FIGS. 5A/5Bb) to control execution of an audio function (e.g., a call function, a media playback function, or a recording function).

In operation 820, the audio processor 540 may process and output an audio signal along an audio processing path that is configured in response to a current state of the electronic device.

For example, when the electronic device 101 is in a first state, the audio processor 540 may configure an audio processing path based on first configuration information mapped to the first state, and process and output an audio signal along the configured audio processing path.

In operation 830, a sensor processor (e.g., the sensor processor 520 in FIGS. 5A/5B) may determine the state of the electronic device 101 based on a measurement value measured by the sensor device 530 in the context of outputting the audio signal.

In operation 840, the sensor processor 520 may transmit state information of the electronic device 101 (hereinafter, device state information) to the audio processor 540.

In operation 850, the audio processor 540 may determine a state change of the electronic device 101 based on the device state information transmitted from the sensor processor 520.

In operation 860, the audio processor 540 may, based on the state change of the electronic device 101, obtain second configuration information mapped to the changed state from a calibration DB.

In operation 870, the audio processor 540 may reconfigure an audio processing path of a dynamic post-processing module in the audio processor based on the second configuration information, and may change the audio processing path.

For example, the audio processor 540 may reduce the time for audio signal reconfiguration by changing only the configuration of a data processing path of the dynamic post-processing module while maintaining the configuration of a stream module and an audio interface in the audio processor. The audio processor 540 may control the close and open states of processing function blocks in the dynamic post-processing module 5431, and reconfigure a calibration value of each processing function block.

In operation 880, the audio processor 540 may process and output the audio signal along the reconfigured audio processing path.

According to an embodiment, a method for reducing a reconfiguration time of audio signal processing in an electronic device may comprise determining a state of the electronic device by a sensor processor, based on a measurement value detected by a sensor device, when executing an audio function by using the audio input/output device. According to an embodiment the method may comprise transmitting the determined device state information to an audio processor communicating with the sensor processor. According to an embodiment the method may comprise, in case that the electronic device is identified as having changed from a first state to a second state based on the device state information transmitted from the sensor processor, reconfiguring an audio processing path by the audio processor based on configuration information corresponding to the second state. According to an embodiment the method may comprise executing the audio function by the audio processor based on an audio signal processed along the reconfigured audio processing path.

According to an embodiment, wherein in the reconfiguring of the audio processing path, an audio processing path for at least some modules in the audio processor is reconfigured based on the configuration information, and wherein the at least some modules comprise a post-processing module.

According to an embodiment, wherein in the determining of the state of the electronic device, the sensor processor determines the state of the electronic device according to a state change of a flexible display having a variable visible area for displaying visual information, and the device state information comprises one of an opened state, a closed state, and an intermediate state in response to the state change of the flexible display.

According to an embodiment, wherein the audio processor comprises a stream module, a dynamic post-processing module, and an audio interface, wherein in the reconfiguring of the audio processing path for the at least some modules in the audio processor, the audio processor reconfigures an audio processing path of the dynamic post-processing module based on the change of the electronic device to the second state, while maintaining configurations of the stream module and the audio interface.

According to an embodiment, wherein the configuration information comprises first configuration information optimized for the first state of the electronic device, second configuration information optimized for the second state, and Nth configuration information optimized for an Nth state, wherein each piece of the configuration information comprises information about close or open states of processing function blocks included in the dynamic post-processing module and a setting value of each processing function block, and the processing function blocks comprise at least one among a gain processing block, a filter application block, an echo removal block, an audio format change block, and a channel change block.

According to an embodiment, the sensor processor and the audio processor may be configured to communicate via an IPC (inter processor communication) communication.

According to an embodiment, the sensor processor may include a sensor digital signal processor, and the audio processor may include an audio digital signal processor.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an applicationspecific integrated circuit (ASIC.

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a sensor device;
a sensor processor operatively connected to the sensor device;
an audio processor configured to communicate with the sensor processor;
an audio input/output device operatively connected to the audio processor;
a memory; and
a processor,
wherein the memory comprises:
instructions configured to cause the sensor processor to determine a state of the electronic device, based on a measurement value detected by the sensor device, when executing, under control of the processor, an audio function by using the audio input/output device, and transmit the determined device state information to the audio processor; and
instructions configured to cause the audio processor to, in case that the electronic device is identified as having changed from a first state to a second state based on the device state information transmitted from the sensor processor, reconfigure an audio processing path of the audio processor based on configuration information corresponding to the second state, and execute the audio function based on an audio signal processed along the reconfigured audio processing path.

2. The electronic device of claim 1, wherein the memory further comprises instructions configured to cause the audio processor to reconfigure an audio processing path for at least some modules in the audio processor, based on the configuration information, and
wherein the at least some modules comprise a post-processing module.

3. The electronic device of claim 1, further comprising a flexible display having a variable visible area for displaying visual information,
wherein the device state information comprises one of an opened state, a closed state, and an intermediate state in response to a state change of the flexible display.

4. The electronic device of claim 1, wherein the audio processor comprises a stream module, a dynamic post-processing module, and an audio interface, and
wherein the memory further comprises instructions configured to cause the audio processor to reconfigure an audio processing path of the dynamic post-processing module based on the change of the electronic device to the second state, while maintaining configurations of the stream module and the audio interface.

5. The electronic device of claim 3 or 4, wherein the configuration information comprises first configuration information optimized for the first state of the electronic device, second configuration information optimized for the second state, and Nth configuration information optimized for an Nth state.

6. The electronic device of claim 5, wherein each piece of the configuration information comprises information about close or open states of processing function blocks included in the dynamic post-processing module and a setting value of each processing function block, and
wherein the processing function blocks comprise at least one among a gain processing block, a filter application block, an echo removal block, an audio format change block, and a channel change block.

7. The electronic device of claim 3 or 4, wherein the sensor processor and the audio processor are configured to communicate with each other via inter-processor communication (IPC).

8. The electronic device of claim 7, wherein the inter-processor communication (IPC) comprises using a shared memory accessible by the sensor processor and the audio processor, or using a communication bus designed for communication between the sensor processor and the audio processor.

9. The electronic device of claim 3 or 4, wherein the sensor processor comprises a sensor digital signal processor, and the audio processor comprises an audio digital signal processor.

10. The electronic device of claim 3 or 4, wherein the memory further comprises instructions configured to:
cause the sensor processor to detect a state based on a change in external environment of the electronic device and transmit state information based on the external environment change to the audio processor, and
cause the audio processor to reconfigure an audio processing path in the audio processor based on the state information transmitted from the sensor processor.

11. The electronic device of claim 1, wherein the memory further comprises instructions configured to cause the audio processor to maintain an audio processing path corresponding to a current state in case that the state of the electronic device has not changed based on the device state information transmitted from the sensor processor.

12. A method for reducing a reconfiguration time of audio signal processing in an electronic device, the method comprising:
determining a state of the electronic device by a sensor processor, based on a measurement value detected by a sensor device, when executing an audio function by using the audio input/output device;
transmitting the determined device state information to an audio processor communicating with the sensor processor;
in case that the electronic device is identified as having changed from a first state to a second state based on the device state information transmitted from the sensor processor, reconfiguring an audio processing path by the audio processor based on configuration information corresponding to the second state; and
executing the audio function by the audio processor based on an audio signal processed along the reconfigured audio processing path.

13. The method of claim 12, wherein in the reconfiguring of the audio processing path, an audio processing path for at least some modules in the audio processor is reconfigured based on the configuration information, and
wherein the at least some modules comprise a post-processing module.

14. The method of claim 12, wherein in the determining of the state of the electronic device, the sensor processor determines the state of the electronic device according to a state change of a flexible display having a variable visible area for displaying visual information, and the device state information comprises one of an opened state, a closed state, and an intermediate state in response to the state change of the flexible display.

15. The method of claim 12, wherein the audio processor comprises a stream module, a dynamic post-processing module, and an audio interface,
wherein in the reconfiguring of the audio processing path for the at least some modules in the audio processor, the audio processor reconfigures an audio processing path of the dynamic post-processing module based on the change of the electronic device to the second state, while maintaining configurations of the stream module and the audio interface,
wherein the configuration information comprises first configuration information optimized for the first state of the electronic device, second configuration information optimized for the second state, and Nth configuration information optimized for an Nth state, and
wherein each piece of the configuration information comprises information about close or open states of processing function blocks included in the dynamic post-processing module and a setting value of each processing function block, and the processing function blocks comprise at least one among a gain processing block, a filter application block, an echo removal block, an audio format change block, and a channel change block.
